## Europäisches Patentamt
## European Patent Office
## Office européen des brevets

(19)

(11) Numéro de publication: **0 210 923**
**B1**

(12)

# FASCICULE DE BREVET EUROPEEN

(45) Date de publication du fascicule du brevet:
**03.05.89**

(51) Int. Cl.⁴: **B 32 B 17/10,** B 65 H 3/08,
B 65 G 49/06

(21) Numéro de dépôt: **86401648.0**

(22) Date de dépôt: **23.07.86**

(54) **Procédé et dispositif pour la préhension, le transfert et la dépose d'une feuille de matière plastique souple.**

(30) Priorité: **25.07.85 FR 8511377**

(43) Date de publication de la demande:
**04.02.87 Bulletin 87/6**

(45) Mention de la délivrance du brevet:
**03.05.89 Bulletin 89/18**

(84) Etats contractants désignés:
**BE DE FR GB IT SE**

(56) Documents cités:
**DE-A- 2 256 793**
**DE-A- 2 602 622**
**FR-A- 2 531 937**
**GB-A- 2 056 414**
**GB-A- 2 120 974**

(73) Titulaire: **SAINT-GOBAIN VITRAGE, Les Miroirs 18, avenue d'Alsace, F-92400 Courbevoie (FR)**

(72) Inventeur: **Guglielmetti, Giorgio, Corso Italia 42, I-Mondovi' (IT)**
Inventeur: **Carossio, Guido, Via Filadelfia, 132, I-Turin (IT)**
Inventeur: **Gilli, Luigi, Residence Via Carducci 4, I-Luserna S. Giovanni (IT)**

(74) Mandataire: **Muller, René et al, SAINT-GOBAIN RECHERCHE 39, quai Lucien Lefranc, F-93304 Aubervilliers (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne la fabrication de structures stratifiées telles des vitrages feuilletés.

Les vitrages feuilletés utilisés dans le bâtiment et dans les véhicules de transport, notamment en tant que pare-brise, sont formés généralement d'au moins une feuille rigide telle une feuille de verre ou une feuille de matière plastique comme le polycarbonate ou le polyméthacrylate de méthyle, et d'au moins une feuille en matière plastique plus souple, en polyvinylbutyral ou en polyuréthane par exemple, utilisée généralement comme feuille intercalaire dans le cas d'une structure comprenant deux feuilles rigides.

Pour fabriquer ces vitrages feuilletés, on découpe la ou les feuilles de matière plastique souple au préalable au format exact du vitrage ou à un format géométrique légèrement plus grand que l'on désigne par primitif, on les empile avec les autres éléments constitutifs du vitrage feuilleté et on assemble tous ces éléments à l'aide d'une opération d'assemblage proprement dite généralement effectuée en deux étapes: une première étape consistant, par exemple, en une opération de calandrage fournissant un assemblage préliminaire, suivie d'une seconde étape consistant en un cycle d'autoclave mettant en œuvre la température et la pression fournissant l'assemblage définitif.

L'invention concerne plus particulièrement l'empilage de la feuille souple avec les autres éléments constitutifs du vitrage feuilleté, et les opérations qui lui sont liées, notamment la préhension de la feuille de matière plastique souple à un poste de stockage, voisin du poste d'empilage, son transfert au poste d'empilage et sa dépose en position correcte dans l'empilage.

Un des problèmes rencontrés dans l'automatisation des différentes opérations utilisées pour la fabrication des vitrages feuilletés est la préhension de la feuille de matière plastique au poste de stockage et son positionnement correct dans l'empilage pour former le vitrage. En effet, les feuilles de matière plastique telle que le polyvinylbutyral, le polyuréthane, présentent à la température ambiante des ateliers d'assemblage un certain degré de collage et lorsqu'elles sont empilées les unes sur les autres, ce qui est généralement le cas au poste de stockage pour la préhension de la feuille, il est courant qu'au moment de la préhension de la feuille supérieure de la pile on saisisse du même coup la feuille sous-jacente qui lui est plus ou moins collée. Ce phénomène est particulièrement gênant lorsque les feuilles sont disposées à un emplacement fixe et déterminé, ce qui est le cas dans un assemblage automatisé dans lequel il est envisagé de saisir la feuille en cet emplacement fixe et déterminé et de la transférer par une course de longueur constante jusqu'au poste d'empilage du vitrage feuilleté. De sorte que si la feuille a été déplacée de sa position exacte de préhension, elle sera ensuite déposée dans l'empilage dans une position décalée d'autant, donc incorrecte.

L'invention propose un procédé pour la préhension d'une feuille de matière plastique souple disposée au sommet d'une pile de feuilles semblables à un poste de préhension, le transfert de la feuille au poste d'empilage d'une structure feuilletée telle un vitrage feuilleté, et la dépose de la feuille en position correcte dans l'empilage sans risque de déplacement accidentel de la feuille elle-même ou d'une feuille sous-jacente lors de la préhension.

Selon l'invention, on saisit la feuille de matière plastique souple par une aspiration liée à un tamponnement basculant, l'aspiration s'exerçant d'abord sur la partie médiane de la feuille, pour s'étendre progressivement sur un côté de la feuille puis par un retour sur toute la feuille en même temps que la feuille est plaquée sur son support qui est généralement la feuille sous-jacente, suivant le même mouvement de tamponnement basculant, la feuille étant ensuite transférée et déposée au poste d'empilage.

L'aspiration peut s'exercer en des points répartis régulièrement sur toute la surface de la feuille. Dans une variante, l'aspiration peut être limitée à l'ensemble de la feuille moins sa partie centrale, ou encore elle peut être limitée aux seules zones périphériques de la feuille. Cette variante peut être utilisée notamment dans le cas de la préhension de grands formats c'est-à-dire de primitifs pour larges pare-brise d'automobiles par exemple. La force d'aspiration peut être variable et elle peut être déterminée aisément en fonction du poids du primitif à saisir.

L'invention concerne également un dispositif pour la mise en œuvre du procédé de préhension à un poste de stockage, de transfert et de dépose de la feuille de matière plastique souple au poste d'empilage dans une ligne de fabrication de structures feuilletées des vitrages feuilletés. Il comprend un dispositif de préhension proprement dit, pouvant être animé d'un mouvement de montée-baisse, muni d'un tampon basculant aspirant, présentant une face inférieure agissante incurvée, des moyens procurant au tampon le mouvement de basculement, des moyens de transfert du dispositif de préhension du poste de préhension de la feuille au poste de dépose pour l'empilage, la face inférieure du tampon présentant des orifices tels des trous permettant la saisie par aspiration de la feuille de matière plastique.

D'autres avantages et caractéristiques de l'invention apparaîtront dans la suite de la description d'un exemple de réalisation, faite en référence aux figures.

La figure 1 représente l'ensemble du dispositif de préhension et de transfert 1 de la feuille de matière plastique souple 2 au poste de préhension situé au voisinage du poste d'empilage des éléments du vitrage feuilleté où seule une feuille de verre 3 est représentée. Le dispositif de préhension est représenté en position basse, c'est-à-dire en position de préhension de la feuille de matière plastique (non représentée sur cette figure 1) disposée sur une table 4 au poste de préhension.

La figure 2 est une vue de face plus détaillée du dispositif de la figure 1 et de la pile de feuilles en attente sur la table 4.

La figure 3 est une vue partielle de côté sans la table du dispositif représenté sur la figure 2.

La figure 4 est une vue partielle de la face inférieure du tampon du dispositif de préhension représenté sur les figures précédentes.

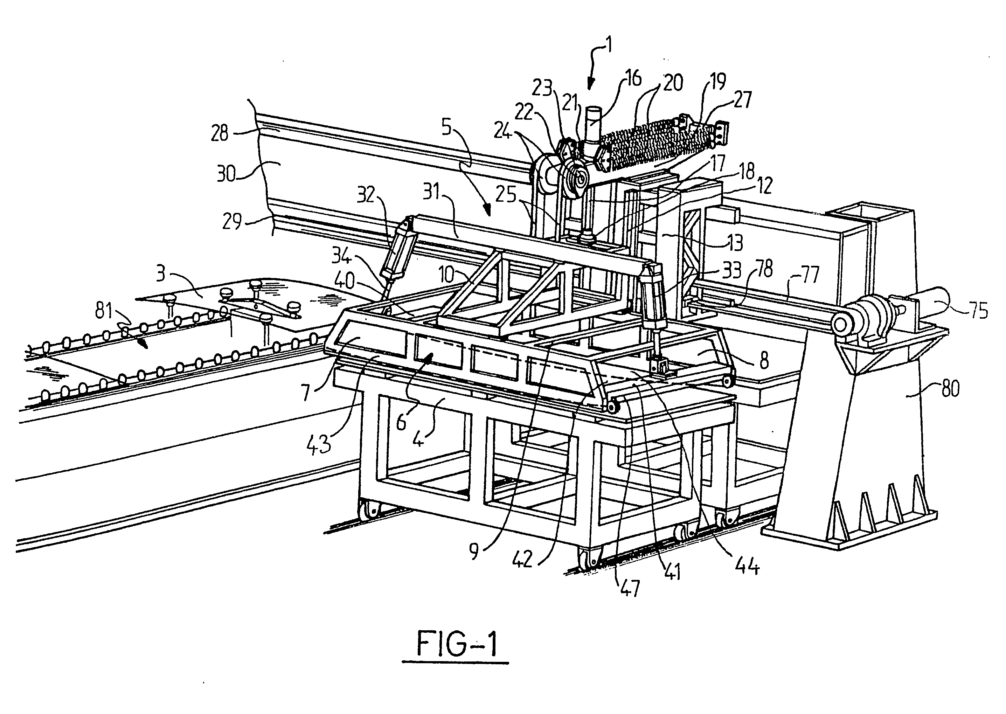

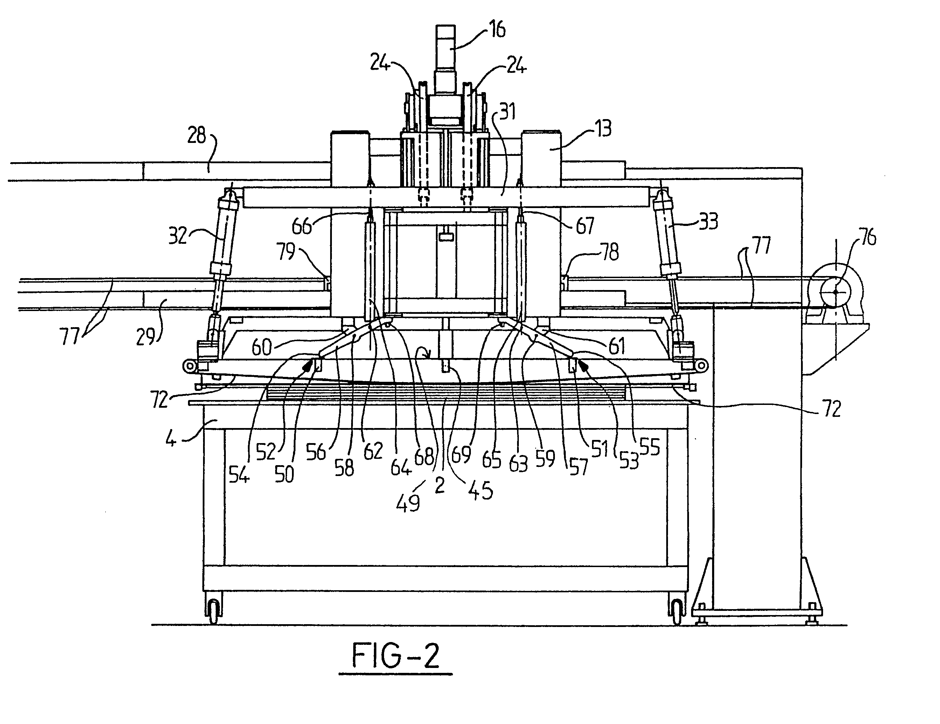

Sur les figures 1, 2 et 3 le dispositif de préhension proprement dit 5 est formé d'un berceau 6 comportant deux flans longitudinaux 7, 8 reliés par des traverses 9 dans sa partie supérieure. Les deux flans 7, 8 portent solidairement un portique 10 transversal monté à une de ses extrémités latérales sur deux glissières verticales 11, 12 portées par un chariot 13. Ce montage procure à l'ensemble du dispositif de préhension 5 la possibilité d'un mouvement de montée-baisse. Ce mouvement est commandé par un moteur 16 à commande numérique entraînant la rotation d'une vis verticale 17 à travers un écrou 18 solidaire du portique 10. Le moteur 16 est monté sur une double potence 19 portée par le chariot 13. Le poids du dispositif de préhension 5 mobile verticalement est compensé par l'action de plusieurs ressorts horizontaux 20 dont les extrémités mobiles sont fixées à deux câbles 21 s'enroulant autour de deux poulies excentriques 22 portées par un même arbre horizontal 23 monté au bout de la double potence transversale 19. Ces poulies excentriques 22 qui compensent la variation de la force des ressorts liée à leur élongation, sont solidaires en rotation de deux autres poulies 24 tournant autour du même arbre 23. Sur ces poulies 24 s'enroulent deux chaines verticales 25 dont les extrémités sont fixées à une traverse 26 du portique 10. Les extrémités opposées des ressorts de compensation 20 sont fixées à une plaque verticale 27 montée à l'extrémité arrière de la double potence 19. Ce montage permet de compenser le poids du dispositif de préhension en tous points de sa trajectoire de montée-baisse.

Le chariot 13 peut se déplacer sur deux rails horizontaux 28, 29 portés par une poutre horizontale 30 disposée perpendiculairement à la ligne d'assemblage où est réalisé l'empilage des éléments constituant le vitrage feuilleté. Ce chariot 11 effectue le transfert de la feuille de matière plastique saisie par le dispositif de préhension proprement dit, du poste de préhension de la feuille au poste d'empilage des éléments du vitrage feuilleté.

Le portique 10 est surmonté d'une poutre horizontale 31, s'étendant longitudinalement dans le plan médian du berceau 6. A chacune des deux extrémités de cette poutre est articulé le corps d'un vérin 32, 33 dont le bout de la tige 34, 35 est monté également articulé sur un axe 36, 37 porté par un palier 38, 39 solidaire d'une traverse 40, 41 appartenant à un tampon 42 à face inférieure incurvée, ledit tampon présentant ici une symétrie par rapport à un plan transversal qui est le même que celui de tout l'ensemble du dispositif de préhension.

Le tampon 42 est formé d'une structure rigide, métallique comportant deux longerons 43, 44 dont les faces inférieures présentent une courbure circulaire, reliés par des traverses 45. Les deux traverses d'extrémités 46, 47 portent vissées sur elles les traverses 40, 41 citées ci-dessus.

La face inférieure 48 de ce tampon est formée d'une feuille de matière plastique relativement rigide cintrée suivant un arc de cercle. Elle est percée d'une multitude de trous permettant l'aspiration de la feuille à saisir comme décrit par la suite.

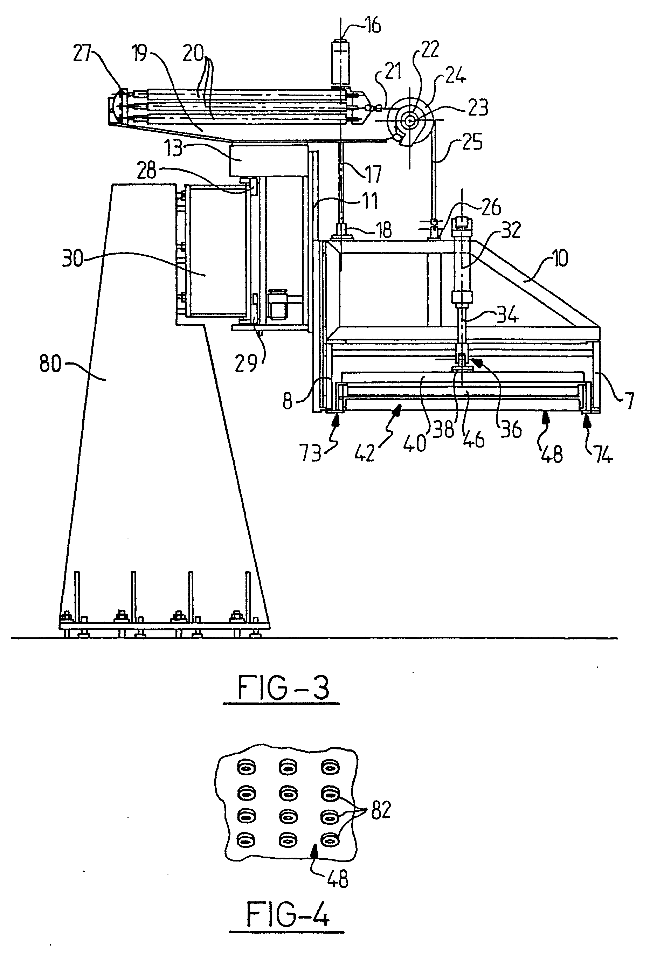

Chaque trou est entouré d'une rondelle élastique en mousse 82 d'environ 1 centimètre d'épaisseur, comme représentée sur la figure 4. Le nombre de trous peut varier d'une réalisation à l'autre. Pour un tampon d'environ 2 mètres de long sur 80 centimètres de large, le nombre de trous peut être par exemple d'environ 400.

La feuille de matière plastique formant la face inférieure du tampon est collée sur les faces inférieures des deux longerons 43, 44, en arc de cercle qui procurent le cintrage de forme cylindrique à la feuille de matière plastique rigide formant la face inférieure du tampon. Cette feuille de matière plastique bien que rigide doit pouvoir être cintrée avec la courbure désirée.

La face supérieure 49 du tampon formée à partir d'une résine épouse la forme des conduits d'aspiration qui sont essentiellement deux conduits principaux longitudinaux, symétriques par rapport au plan longitudinal du tampon et de nombreux conduits transversaux secondaires, disposés à environ 5 centimètres de distance les uns des autres. Ces conduits sont mis en communication avec les trous de la face inférieure 48. La face supérieure 49 du tampon est percée de quatre orifices permettant la connexion de tuyaux d'aspiration aux deux conduits longitudinaux principaux.

Deux traverses 50, 51 symétriques par rapport au plan axial transversal du tampon 42 portent deux plaquettes 52, 53 sur lesquelles s'appuient des roulettes 54, 55 fixées à l'extrémité de brides 56, 57 articulées approximativement en leur centre, autour d'axes 58, 59 portés par deux oreilles 60, 61 également symétriques par rapport au plan axial du tampon. Chaque bride porte un axe 62, 63 en un point situé entre l'articulation centrale et l'extrémité opposée à celle terminée par une roulette. Sur cet axe est accrochée l'extrémité inférieure d'un ressort vertical 64, 65, fixé à son extrémité supérieure au bout d'une tige verticale 66, 67, vissée sur la poutre horizontale 31. L'extrémité des brides 56, 57 opposée à celle terminée par une roulette, est munie d'une petite tige 68, 69 qui, lorsque le tampon est en position horizontale, sous l'action du ressort 64, 65 vient en butée sur la face inférieure du portique 10.

A chaque bout des deux traverses d'extrémités 46, 47 du tampon est fixé un ressort à lame 72, dont l'autre extrémité est fixée à une semelle 73, 74 appartenant aux flans longitudinaux 7, 8 du berceau. Ces quatres ressorts à lame maintiennent le tampon dans sa position d'équilibre central.

Le système des brides et des ressorts maintient le tampon contre la pile de primitifs au cours du tamponnement; il provoque une déformation du tampon dont la courbure est alors réduite durant le tamponnement.

Sur le berceau est disposé un détecteur de proximité non représenté, qui traverse le tampon et qui détecte la position du primitif 2 à saisir en haut de la pile et qui s'escamote dans le tampon au contact de ce primitif.

En position de préhension, le dispositif est situé à l'aplomb de la table 4 portant les primitifs 2 qui sont empilés régulièrement les uns sur les autres. Il peut être prévu plusieurs positions de préhension au cours d'une même fabrication de vitrages feuilletés. A chacune de ces positions correspond une table (non représentée) portant une pile de primitifs identiques ou différents selon que l'on fabrique un ou deux types de vitrages feuilletés. Les positions de préhension sont déterminées et on peut régler le déplacement du dispositif de préhension le long des rails 28, 29 en conséquence.

Le chariot 13 glisse sur les rails par déplacement sur coussin d'air. Le déplacement du chariot est provoqué par un moteur 75 à commmande numérique porté par le bâti 80, qui entraîne une roue dentée 76 sur laquelle s'engrène une courroie crantée 77 dont une des extrémité 78 est fixé à un côté du chariot 13 alors que l'autre extrémité 79, est fixée à l'autre côté du chariot, après retour de la courroie autour d'une poulie non représentée disposée de l'autre côté de la poutre 30.

Le fonctionnement du dispositif est maintenant décrit en relation avec la fabrication d'un vitrage feuilleté formé de deux feuilles de verre et d'une feuille intercalaire en polyvinylbutyral, et plus particulièrement en relation avec la phase consistant à former l'empilage du primitif avec les deux feuilles de verre. L'ensemble des opérations est commandé et contrôlé par un cerveau électronique.

Pendant que les deux feuilles de verre arrivent par le convoyeur 81 au poste d'empilage et sont réglées en position correcte pour l'empilage, le dispositif de préhension et de transfert 1 de la feuille de matière plastique souple 2 servant d'intercalaire selon l'invention arrive à l'aplomb d'une table 4 portant une pile de primitifs convenables 2. La position à l'aplomb de la table est déterminée au préalable. Le dispositif de préhension proprement dit 5, c'est-à-dire la partie susceptible d'être animée du mouvement de montée-baisse, est baissé par la mise en action du moteur 16 commandant la vis verticale 17 tournant dans l'écrou 18 jusqu'à ce que le détecteur de proximité détecte la présence du primitif supérieur 2 de la pile. A ce moment, le détecteur d'escamote dans l'épaisseur du tampon et le dispositif 5 continue à baisser jusqu'à ce que les rondelles 82 tapissant la zone médiane de la face inférieure 48 du tampon 42 arrivent au contact du primitif 2 dans sa partie médiane. On met en marche l'aspiration qui s'exerce sur le primitif aux emplacements des rondelles, en même temps qu'on procure au tampon 42 un mouvement de basculement qui l'amène progressivement jusqu'à une extrémité du primitif puis par un retour jusqu'à l'autre extrémité. Ce mouvement de basculement est provoqué par la mise en œuvre des vérins 32, 33. Le mouvement est équilibré par le double système des brides et ressorts. Au cours de ce mouvement de basculement qui s'effectue par appui des côtés longitudinaux du tampon sur les semelles 73, 74 du berceau, le primitif 2 est saisi progressivement au fur et à mesure du contact opéré par le tampon par l'intermédiaire des rondelles 82 dont est munie sa face inférieure 58. A la fin du mouvement de retour du tampon, le primitif est totalement saisi par lui, c'est-à-dire qu'il subi alors une aspiration répartie sur l'ensemble de sa surface grâce à tous les trous disposés sur sa face inférieure.

Au moment où le primitif supérieur 2 est saisi, la pile des primitifs restante est maintenue dans la position de préhension par le tamponnement. Le mouvement de préhension n'affecte en aucun cas la position des autres primitifs qui sont tenus appuyés sur la table par le tampon. Lorsque le mouvement de basculement est terminé, que le primitif est saisi sur la totalité de sa surface, le dispositif de préhension est levé par l'action du moteur 16. Puis l'ensemble est amené par l'intermédiaire du chariot 13 qui se déplace tiré par la courroie 77 entrainée par le moteur 75, le long des rails horizontaux 28, 29 jusqu'au poste d'empilage. A ce poste, la première feuille de verre 3 est déjà dans la position de l'empilage. L'autre feuille de verre non représentée est en attente dans une position hors du chemin parcouru par le dispositif de préhension et de transfert du primitif. Le dispositif de préhension est alors abaissé par l'intermédiaire du moteur 16 jusqu'à la proximité immédiate de la feuille de verre 3 et, par coupure de l'aspiration, le primitif est déposé sur la feuille de verre 3 disposé horizontalement. Puis le dispositif de préhension et de transfert est évacué et amené à nouveau au poste de préhension ou à un poste similaire où il ira saisir un autre primitif pour un nouvel assemblage. Pendant ce temps, la deuxième feuille de verre non représentée est amenée à l'aide d'un dispositif annexe avec lequel elle est placée sur le primitif préalablement déposé pour ainsi compléter l'empilage qui est ensuite amené au poste suivant de l'assemblage automatique.

**Revendications**

1. Procédé pour la préhension d'une feuille de matière plastique souple à partir d'une pile de feuilles disposées à un poste de préhension, suivi du transfert de la feuille du poste de préhension à un poste de fabrication de structures feuilletées, notamment de vitrages feuilletés, par empilage de la feuille de matière plastique avec les autres éléments constitutifs de la structure feuilletée, et la dépose de la feuille de matière plastique à l'emplacement exact de l'empilage, caractérisé en ce qu'on saisit la feuille de matière plastique souple par une aspiration liée à un tamponnnement basculant, en exerçant l'aspiration d'abord sur la partie médiane de la feuille et en l'étendant progressivement jusqu'à une extrémité de la feuille puis par retour du basculement, en l'étendant sur toute sa surface en même temps que l'on plaque la feuille sur son support, généralement la feuille sous-jacente de l'empilage, au cours dudit mouvement de tamponnement basculant.

2. Procédé selon la revendication 1, caractérisé en ce qu'on exerce l'aspiration sur l'ensemble de la feuille à l'exception de sa zone centrale.

3. Procédé selon une des revendications 1 ou 2, caractérisé en ce qu'on exerce l'aspiration à partir de points d'aspiration répartis sur la surface de la feuille.

4. Dispositif pour la préhension d'une feuille de matière plastique souple à partir d'une pile de feuilles (2) disposée à un poste de préhension, le transfert du poste de préhension à un poste de fabrication de structures feuilletées, notamment de vitrages feuilletés, par empilage de la feuille de matière plastique avec les autres éléments constitutifs de la structure feuilletée, et la dépose de la feuille de matière plastique à l'emplacement exact de l'empilage, caractérisé en ce qu'il comprend un dispositif de préhension (5) pouvant être animé d'un mouvement de montée-baisse muni d'un tampon (42) basculant, aspirant et présentant une face inférieure agissante incurvée, des moyens (32, 33) procurant au tampon le mouvement de basculement, des moyens de transfert (28, 29, 77) du dispositif de préhension, la face inférieure du tampon présentant des orifices d'aspiration permettant la saisie par aspiration de la feuille de matière plastique.

5. Dispositif selon la revendication 4, caractérisé en ce que le dispositif de préhension présente une symétrie par rapport à un plan transversal.

6. Dispositif selon une des revendications 4 et 5, caractérisé en ce que le dispositif de préhension comprend un berceau (6) muni de semelles (73, 74) sur lesquelles s'appuient les côtés longitudinaux du tampon au cours du basculement.

7. Dispositif selon la revendication 6, caractérisé en ce qu'il comporte des ressorts (72) assurant la position d'équilibre horizontal du tampon.

8. Dispositif selon une des revendications 4 à 7, caractérisé en ce que les moyens procurant au tampon le mouvement de basculement sont des vérins (32, 33).

9. Dispositif selon une des revendications 4 à 8, caractérisé en ce que le mouvement de montée-baisse est commandé par un moteur à commande numérique (16).

10. Dispositif selon une des revendications 4 à 9, caractérisé en ce que le dispositif de préhension est suspendu à un système de compensation de son poids comprenant des ressorts (20).

11. Dispositif selon une des revendications 4 à 10, caractérisé en ce que les moyens de transfert du dispositif de préhension comprennent un chariot (13) commandé par un moteur à commande numérique (75).

12. Dispositif selon une des revendications 4 à 11, caractérisé en ce qu'il est commandé par un cerveau électronique.

13. Dispositif selon une des revendications 4 à 12, caractérisé en ce qu'il peut utiliser des postes de préhension différents au cour d'une même fabrication.

14. Dispositif selon une des revendications 4 à 13, caractérisé en ce qu'il est appliqué à la préhension et au transfert d'une feuille de polyvinylbutyral entrant dans le fabrication d'un vitrage feuilleté.

**Patentansprüche**

1. Verfahren zum Ergreifen einer Folie aus elastischem Kunststoffmaterial von einem Stapel von Folien, der an einem Greifstand angeordnet ist, gefolgt vom Transport der Folie vom Greifstand zu einem Fabrikationsstand für Verbundstrukturen, insbesondere Verbundgläsern, durch Stapeln der Folie aus Kunststoffmaterial zusammen mit den anderen Elementen, die die Verbundstruktur bilden, und genaues Anordnen der Folie aus Kunststoffmaterial am Stapelplatz, dadurch gekennzeichnet, daß man die Folie aus elastischem Kunststoffmaterial durch Ansaugen ergreift, das mit einer Kippbewegung eines Puffers gekoppelt ist, indem man das Ansaugen zuerst im Mittelteil der Folie ausübt und es dann fortschreitend bis zu einem Ende der Folie ausdehnt, woraufhin man das Ansaugen durch Rückführung der Kippbewegung zur gleichen Zeit über die gesamte Oberfläche der Folie ausdehnt, zu der man die Folie während der Kippbewegung des Puffers auf ihren Träger preßt, der im allgemeinen die darunter liegende Folie des Stapels ist.

2. Verfahren nach Anspruch 1, dadurch gekennzeichnet, daß man das Ansaugen auf die gesamte Folie mit Ausnahme ihrer zentralen Zone ausübt.

3. Verfahren nach einem der Ansprüche 1 oder 2, dadurch gekennzeichnet, daß man das Ansaugen mit Ansaugpunkten ausführt, die über die Oberfläche der Folie verteilt sind.

4. Vorrichtung zum Ergreifen einer Folie aus elastischem Kunststoffmaterial von einem Stapel von Folien (2), die an einem Greifstand angeordnet sind, zum Befördern vom Greifstand bis zu einem Fabrikationsstand für Verbundstrukturen, insbesondere Verbundgläsern, durch Stapeln der Folie aus Kunststoffmaterial zusammen mit anderen Elementen, die die Verbundstruktur bilden und das genaue Anordnen der Folie aus Kunststoffmaterial am Stapelplatz, dadurch gekennzeichnet, daß die Vorrichtung eine Greifvorrichtung (5) umfaßt, die eine Auf- und Abbewegung ausführen kann und mit einem kippfähigen Puffer (42) versehen ist, der ansaugt und eine untere wirksame, gebogene Fläche aufweist, weiter mit Einrichtungen (32, 33), die dem Puffer die Kippbewegung vermitteln, Einrichtungen zum Transport (28, 29, 77) der Greifvorrichtung, wobei die untere Fläche des Puffers Ansaugöffnungen aufweist, die das Ergreifen der Folie aus Kunststoffmaterial durch Ansaugen gestatten.

5. Vorrichtung nach Anspruch 4, dadurch gekennzeichnet, daß die Greifvorrichtung mit Bezug auf eine Querebene symmetrisch ist.

6. Vorrichtung nach einem der Ansprüche 4 und 5, dadurch gekennzeichnet, daß die Greifvorrichtung einen Schlitten (Träger) (6) umfaßt, der mit Schwellen (Kufen) (73, 74) versehen ist, auf denen sich die Längsseiten des Puffers während des Kippens abstützen.

7. Vorrichtung nach Anspruch 6, dadurch gekennzeichnet, daß sie Federn (72) umfaßt, die die horizontale Gleichgewichtsposition des Puffers sicherstellen.

8. Vorrichtung nach einem der Ansprüche 4 bis 7, dadurch gekennzeichnet, daß die Einrichtungen, die dem Puffer die Kippbewegung vermitteln, Stellglieder (32, 33) sind.

9. Vorrichtung nach einem der Ansprüche 4 bis 8, dadurch gekennzeichnet, daß die Auf- und Abbewegung durch einen numerisch gesteuerten Motor (16) gesteuert wird.

10. Vorrichtung nach einem der Ansprüche 4 bis 9, dadurch gekennzeichnet, daß die Greifvorrichtung an einem System zur Kompensation ihres Gewichtes aufgehängt ist, das Federn (20) umfaßt.

11. Vorrichtung nach einem der Ansprüche 4 bis 10, dadurch gekennzeichnet, daß die Einrichtung zum Transport der Greifvorrichtung einen Wagen (13) umfaßt, der von einem numerisch gesteuerten Motor (75) gesteuert ist.

12. Vorrichtung nach einem der Ansprüche 4 bis 11, dadurch gekennzeichnet, daß sie durch ein Elektronengehirn gesteuert ist.

13. Vorrichtung nach einem der Ansprüche 4 bis 12, dadurch gekennzeichnet, daß man während der gleichen Herstellung verschiedene Greifstände benutzen kann.

14. Vorrichtung nach einem der Ansprüche 4 bis 13, dadurch gekennzeichnet, daß sie zum Ergreifen und Transport einer Folie aus Polyvinylbutyral benutzt wird, die man bei der Herstellung eines Verbundglases einsetzt.

**Claims**

1. A method of picking up a sheet of flexible plastics material from a stack of sheets disposed at a picking-up station, followed by transference of the sheet from the picking-up station to a station for the manufacture of laminated structures, notably laminated panes, by stacking the sheet of plastics material with the other constituent elements of the laminated structure, and the depositing of the sheet of plastics material at the exact location of the stack, characterized in that the flexible sheet of plastics material is gripped by a suction associated with a tilting dabbing action, by applying the suction firstly to the median art of the sheet and then extending it progressively as far as one end of the sheet and then, by return of the tilting, by extending it over the entire surface at the same time as the sheet is pressed onto its support, generally the sheet next underlying it of the stack, during the course of said tilting dabbing movement.

2. A method according to Claim 1, characterized in that the suction is applied to the entirety of the sheet with the exception of its central zone.

3. A method according to one of Claims 1 or 2, characterized in that the suction is applied from suction points distributed over the surface of the sheet.

4. Apparatus for the picking-up of a sheet of flexible plastics material from a stack of sheets (2) disposed at a picking-up station, for the transfer from the picking-up station to a station for the manufacture of laminated structures, notably laminated panes, by stacking of the sheet of plastics material with the other constituent elements of the laminated structure, and the depositing of the sheet of plastics material at the exact location of the stack, characterized in that it comprises a picking-up apparatus (5), capable of being subjected to an up-and-down movement, equipped with a suction, tilting pad (42) possessing a curved, active lower face, means (32, 33) for imparting the tilting movement to the pad, and means for the transfer (28, 29, 77) from the picking-up apparatus, the lower face of the pad possessing suction orifices enabling the sheet of plastics material to be gripped by suction.

5. Apparatus according to Claim 4, characterized in that the picking-up apparatus possesses a symmetry with respect to a transverse plane.

6. Apparatus according to one of Claims 4 and 5, characterized in that the picking-up apparatus comprises a cradle (6) equipped with bearing plates (73, 74), against which the longitudinal edges of the pad bear during the tilting.

7. Apparatus according to Claim 6, characterized in that it comprises springs (72) assuring the horizontal equilibrium position of the pad.

8. Apparatus according to one of Claims 4 to 7, characterized in that the means imparting the tilting movement to the pad are jacks (32, 33).

9. Apparate according to one of Claims 4 to 8, characterized in that the up-and-down movement is governed by a numerically controlled motor (16).

10. Apparatus according to one of Claims 4 to 9, characterized in that the picking-up apparatus is suspended from a system for compensating its weight, comprising springs (20).

11. Apparatus according to one of Claims 4 to 10, characterized in that the means for transfer from the picking-up apparatus comprise a carriage (13) governed by a numerically controlled motor (75).

12. Apparatus according to one of Claims 4 to 11, characterized in that it is controlled by an electronic brain.

13. Apparatus according to one of Claims 4 to 12, characterized in that it may use different picking-up stations during the course of a single production.

14. Apparatus according to one of Claims 4 to 13, characterized in that it is applied to the picking-up and the transfer of a sheet of polyvinyl butyral used in the manufacture of a laminated pane.

FIG-1

FIG-2

FIG-3

FIG-4

11